# EUROPÄISCHE PATENTSCHRIFT

(11) **EP 2 971 652 B1**
(45) Veröffentlichungstag und Bekanntmachung des Hinweises auf die Patenterteilung: **17.01.2018**
(21) Anmeldenummer: 14707142.7
(22) Anmeldetag: 27.02.2014
(51) Int. Cl.: F01D 15/10, F02C 9/00, H02J 3/30, F02C 6/14, F02C 9/54

(54) **BEREITSTELLUNG NEGATIVER REGELLEISTUNG DURCH EINE GASTURBINE**
PROVISION OF NEGATIVE ELECTRIC POWER OUTPUT BY GAS TURBINE
MIS À DISPOSITION D'ALIMENTATION ÉLECTRIQUE NÉGATIVE PAR TURBINE A GAZ

(30) Priorität: 18.04.2013 DE 102013206992
(43) Veröffentlichungstag der Anmeldung: 20.01.2016
(73) Patentinhaber: Siemens Aktiengesellschaft, 80333 München (DE)
(72) Erfinder: EBNER, Günther, 91466 Gerhardshofen (DE); LENK, Uwe, 08064 Zwickau (DE)
(86) Internationale Anmeldenummer: PCT/EP2014/053828
(87) Internationale Veröffentlichungsnummer: WO 2014/170058

(56) Entgegenhaltungen:
- EP-A2- 2 557 296
- EP-A2- 2 568 127
- US-A- 4 158 145

## Beschreibung

Die vorliegende Erfindung betrifft ein Verfahren zum Bereitstellen negativer Regelleistung an ein elektrisches Übertragungs- bzw. Versorgungsnetz durch Betrieb einer Gasturbine sowie eine entsprechende für derartige Verfahren geeignete Gasturbine.

Aufgrund der vermehrten Einspeisung von elektrischer Energie aus regenerativen Energiequellen (Sonnenenergie, Windenergie, usw.) rückt das Problem der Aufrechterhaltung der Netzstabilität von elektrischen Übertragungs- bzw. Versorgungsnetzen zunehmend in den Fokus der Energietechnik. Um Stabilität in diesen Netzen gewährleisten zu können, muss die in diese Netze eingespeiste elektrische Leistung zu jedem Zeitpunkt einem vom Betrag her vergleichbaren Leistungsverbrauch gegenüber stehen. Insbesondere aufgrund der stark fluktuierenden Einspeisungen aus den regenerativen Energiequellen ist diese Deckung von Angebot und Verbrauch nicht immer gewährleistet. So zeigen sich etwa in den elektrischen Übertragungs- bzw. Versorgungsnetzen Schwankungen im Frequenz- bzw. Spannungsverhalten als auch über die Zeit variierende Abweichungen hinsichtlich des Wirk- und Blindleistungsverhältnisses.

Kommt es bspw. aufgrund von geeigneten Wetterbedingungen zu einer Vermehrten Einspeisung von elektrischer Energie aus regenerativen Energiequellen, kann ähnlich zu Zeiten von bestehender Schwachlast im Netz, ein Leistungsüberschuss in den Netzen vorliegen. Um die Netzstabilität nun aufrecht zu erhalten, ist dieser Überschuss an elektrischer Energie auf geeignete Art und Weise zu entfernen.

Herkömmliche Ansätze der Energietechnik beruhen zur Verminderung von einem Leistungsüberschuss in den elektrischen Versorgungs- und/oder Übertragungsnetzen auf der Reduzierung der Leistungsabgabe von sich im Betrieb befindenden Kraftwerken, z.B. fossil befeuerten Kraftwerken, die in Teillast geschaltet bzw. sogar in einem Stand-By-Modus betrieben werden. Aufgrund dieser Abregelung der Leistungsabgabe kann das Leistungsangebot in den Netzen dem Leistungsbedarf angepasst werden.

Nachteilig an solchen aus dem Stand der Technik bekannten Lösungen ist jedoch, dass dem vorherrschenden Überangebot an elektrischer Leistung keine unmittelbare Nutzung der zur Verfügung stehenden Energie gegenüberstehen kann. Dadurch kommt es zu einer nur zeitlich verzögerten Netzstabilisierung. Diese zeitliche Verzögerung mag jedoch mitunter derartig lange andauern, dass ein sicherer und stabiler Netzbetrieb nicht ausreichend möglich ist.

EP 2 557 296 A2 offenbart ein System und ein Verfahren zur Steuerung einer Gasturbine.

Die vorliegend vorgeschlagene Lösung soll helfen, diese aus dem Stand der Technik bekannten Nachteile zu vermeiden. Insbesondere soll eine technische Lösung vorgeschlagen werden, die eine ausreichend schnelle Nutzung der in den Übertragungsnetzen zur Verfügung stehenden elektrischen Energie ermöglicht. Diese Nutzung soll bei sich abzeichnenden Instabilitäten in den Versorgungs- und/oder Übertragungsnetzen verhältnismäßig kurzzeitig (weniger als eine Minute an Zeit) ermöglicht werden. Weiter soll diese Nutzung der elektrischen Energie auf der Grundlage von bereits bestehender Energieinfrastruktur und beherrschbarer Technologie erfolgen. Dies vermindert einerseits größere Investitionskosten und andererseits eine zeitaufwändige technologische Entwicklungsphase. Weiter soll die vorgeschlagene technische Lösung auch einen Betreiber einer Kraftwerksanlage in die Lage versetzen, die so genutzte elektrische Energie weiterhin technisch und damit wirtschaftlich sinnvoll zu nutzen und etwa in einem Rückverstromungsverfahren wieder als elektrische Energie abzugeben.

Diese der Erfindung zugrunde liegenden Aufgaben werden gelöst durch ein Verfahren zum Bereitstellen negativer Regelleistung gemäß Anspruch 1 und durch eine Gasturbine, welche mit einer dynamoelektrischen Maschine gekoppelt und dazu ausgebildet ist, ein solches nachfolgend beschriebenes Verfahren auszuführen.

Insbesondere werden diese der Erfindung zugrunde liegenden Aufgaben gelöst durch ein Verfahren zum Bereitstellen negativer Regelleistung an ein elektrisches Versorgungs- und/oder Übertragungsnetz durch Betrieb einer Gasturbine umfassend die folgenden Schritte:
- Versorgen einer Dynamoelektrischen Maschine der Gasturbine mit elektrischer Energie zum motorischen Betrieb aus dem Versorgungs- und/oder Übertragungsnetz;
- Regeln bzw. Steuern der elektrischen Aufnahmeleistung durch den motorischen Betrieb in Abhängigkeit eines Netzsignals des Versorgungs- und/oder Übertragungsnetzes, an welches die Gasturbine angeschlossen ist;
- Verändern eines Betriebsparameters der Gasturbine für den motorischen Betrieb infolge dieser Regelung bzw. Steuerung zur beabsichtigten Erhöhung der elektrischen Aufnahmeleistung aus dem Versorgungs- und/oder Übertragungsnetz;

Der Erfindung liegt die Idee zugrunde, durch Bereitstellung von negativer Regelleistung durch Aufnahme von elektrischer Rückleistung mittels einer dynamoelektrischen Maschine, mit welcher die Gasturbine mechanisch gekoppelt ist, bei Vorherrschen eines Überangebots an elektrischer Leistung in den Versorgungs- und/oder Übertragungsnetzen, diese durch motorischen Betrieb der dynamoelektrischen Maschine zu nutzen. Gleichzeitig erfolgt durch die Nutzung dieses Überangebots an elektrischer Energie eine Übertragungsnetzstabilisierung, indem elektrische Energie aus dem Versorgungs- und/oder Übertragungsnetz entfernt wird.

Eine dynamoelektrische Maschine kann im Sinne der vorliegenden Erfindung sowohl als Motor als auch als Generator ausgebildet sein. Wesentlich ist jedoch, dass die dynamoelektrische Maschine sich zum motorischen Betrieb der Gasturbine eignet. Insbesondere ist die dynamoelektrische Maschine als Generator ausgebildet, der auch gleichzeitig als Motor zum motorischen Betrieb der Gasturbine betrieben werden kann.

Aufgrund des motorischen Betriebs der dynamoelektrischen Maschine wird die Gasturbine weiterhin betrieben, wobei insbesondere der Kompressor der Gasturbine weiterhin einen Luftmassenstrom komprimiert und Kompressionsleistung erfordert. Diese Kompressionsleistung wird durch die elektrische Energie abgedeckt, welche aus dem Versorgungs- und/oder Übertragungsnetz entnommen wird. Die somit erforderliche Kompressionsleistung fördert also eine Entnahme von elektrischer Energie aus den Netzen. In anderen Worten ausgedrückt kann diese aus den Versorgungs- und/oder Übertragungsnetzen entnommene Rückleistung eine geeignete negative Regelleistung zur Netzstabilisierung zur Verfügung stellen. Da zudem die zu rotierenden Massen in der Gasturbine, die durch den motorischen Betrieb am Rotieren gehalten werden, verhältnismäßig groß sind, wird auch ausreichend elektrische Energie aus den Netzen entnommen, um eine Netzstabilisierung zu ermöglichen.

Die Bereitstellung dieser erfindungsgemäßen Rückleistung kann aufgrund von bereits bestehender energietechnischer Infrastruktur erfolgen. So können etwa bereits bestehende Gasturbinen nach geeigneter und kostengünstiger Umrüstung sowohl im herkömmlichen Sinne zur Stromerzeugung als auch im erfindungsgemäßen Sinne zur Bereitstellung von negativer Regelleistung durch motorischen Betrieb der dynamoelektrischen Maschine betrieben werden.

Weiterhin erweist sich die vorliegende Erfindung als vorteilhaft, da aufgrund der großen Trägheit der rotierenden Massen in der Gasturbine eine Momentanreserve nutzbar wird, die zusätzlich zur Netzstabilisierung beitragen kann. Insbesondere wirkt die große Trägheit der rotierenden Massen (Rotoren der Kompressoren und Expander) Änderungen von Übertragungsnetzfrequenzen stabilisierend entgegen. Diese Wirkung kann im Wesentlichen instantan erfolgen.

Weiterhin eröffnet die vorliegende Erfindung die Möglichkeit, die bei Nutzung der negativen Regelleistung aus den Versorgungs- und/oder Übertragungsnetzen anfallende Ausschussenergie (entspricht der durch den motorischen Betrieb der dynamoelektrischen Maschine umgesetzte Energie), die sich nicht in elektrischer Form sondern beispielsweise in thermischer oder physikalischer Form ansammelt, für zukünftige Zwecke weiter zu nutzen. Diese zusätzliche Energienutzung ermöglicht eine insbesondere hinsichtlich des Wirkungsgrads und der Wirtschaftlichkeit des Betriebs der Gasturbine vorteilhafte Nutzungsvarianten. Insbesondere kann die durch die aufgenommene elektrische Kompressionsleistung zum Teil als Kompressionswärme anfallende Energie dazu eingesetzt werden, einen thermischen Energiespeicher aufzuladen.

Weiterhin erweisen sich Gasturbinen zur Bereitstellung von negativer Regelleistung nach dem erfindungsgemäßen Verfahren als besonders vorteilhaft, da, wie weiter unten im Detail ausgeführt werden wird, die thermische Beanspruchung der bei herkömmlichem Betrieb zur Stromerzeugung thermisch stark beanspruchten Bauteile, geringer ist, bzw. gar nicht erfolgt. Insofern kann beispielsweise die hinsichtlich des Betriebs einer Gasturbine auszuweisende Betriebsstundenzählung (EOH) die Betriebsstunden im Rücklastbetrieb aussparen. Es kommt also zu keiner Bauteillebenszeitverkürzung und damit zu keiner Verkürzung der Wartungsintervalle. Dies wiederum gewährleistet einen wirtschaftlich besonders vorteilhaften Betrieb der Gasturbine. Für einen ungefeuerten Rückleistungsbetrieb können etwa Gasturbinen mit mehr als 100.000 Betriebsstunden ohne Lebensdauer verlängernde Maßnahmen oder Austausch von thermisch beanspruchten Bauteilen genutzt werden.

Da eine Umschaltung zwischen motorischem Betrieb und herkömmlichem, zur Stromerzeugung vorgesehenem Betrieb der dynamoelektrischen Maschine verhältnismäßig kurzzeitig (typischerweise weniger als eine Minute und bevorzugt weniger als 20 Sekunden) möglich ist, kann das erfindungsgemäße Verfahren bei ersten Anzeichen einer Netzinstabilität schnell negative Regelleistung zur Verfügung stellen. Eine zeitaufwändige und mitunter nicht ausreichend schnelle Verminderung der Abgabeleistung von herkömmlich betriebenen Kraftwerken kann damit entfallen. Zudem kann dem Betreiber der Gasturbine ein starker wirtschaftlicher Anreiz erwachsen, indem er seine Gasturbine, die bei Überschuss von elektrischer Energie in den Übertragungsnetzen nicht weiter benötigt wird, zur Energienutzung anbietet. Diese Energienutzung wird mitunter von den Netzbetreibern geldlich entschädigt. Dem Gasturbinenbetreiber wird es also somit ermöglicht, sowohl durch Einspeisung von Strom in die Übertragungsnetze (bei herkömmlichem Betrieb), als auch durch Nutzung von Strom zu Zeiten eines Überangebots an elektrischer Energie wirtschaftlich zu arbeiten. Die zwischen beiden Betriebsmodi liegenden Schaltungsintervalle können hierbei verhältnismäßig kurz, etwa weniger als eine Minute, insbesondere weniger als 20 Sekunden, gehalten werden.

An dieser Stelle sei darauf hingewiesen, dass ein erfindungsgemäßes Netzsignal auch im Sinne eines physikalischen Netzparameters verstanden werden kann, welcher etwa technisch (z.B. sensorisch) erfasst werden kann. Das Netzsignal kann aber auch als Telekommunikationssignal erfasst werden, welches etwa den Zustand des Übertragungsnetzes charakterisiert und beispielsweise von einem Netzbetreiber abgegeben wird.

Gemäß der vorliegenden Erfindung weist die Gasturbine im Sinne eines Gasturbosatzes wenigstens die Funktionsbauteile der dynamoelektrischen Maschine, des Kompressors, der Brennkammer und des Expanders auf. Kompressor und Expander können hierbei mechanisch miteinander gekoppelt sein, bzw. auch mechanisch entkoppelt vorliegen. Bei einer entkoppelten Verschaltung dieser Funktionsbauteile kann sowohl der Kompressor als auch der Expander mit einer thermoelektrischen Maschine gekoppelt sein. Typischerweise ist in einem solchen Fall der Kompressor mit einem elektrischen Motor gekoppelt und der Expander mit einem elektrischen Generator.

Gemäß einer ersten Ausführungsform des erfindungsgemäßen Verfahrens ist vorgesehen, dass die Rückleistungsschutzschaltung der dynamoelektrischen Maschine, die insbesondere als Generator ausgebildet ist, elektrisch bzw. schaltungstechnisch umgangen wird und insbesondere eine alternative Schutzschaltung zugeschaltet wird, die den motorischen Betrieb ermöglicht. Derartige Rückleistungsschutzschaltungen dienen insbesondere dazu, die als Generator betriebene dynamoelektrische Maschine von der ungewünschten Aufnahme von elektrischer Rückleistung aus dem Übertragungsnetz zu schützen. Diese Schutzfunktion verhindert also, dass die als Generator ausgebildete dynamoelektrische Maschine zur Bereitstellung von elektrischer negativer Regelleistung im erfindungsgemäßen Sinn genutzt würde. Insofern ist diese Schutzschaltung durch eine geeignete alternative Schutzschaltung zu ersetzen, die den motorischen Betrieb der dynamoelektrischen Maschine ermöglicht, um gleichzeitig eine kontrollierte und sichere Nutzung von elektrischer Energie aus den Übertragungsnetzen zu gewährleisten.

Entsprechend eines weiteren vorteilhaften Aspekts der Erfindung ist vorgesehen, dass das Netzsignal die Netzfrequenz des Übertragungsnetzes ist. Das Netzsignal ist insofern als physikalischer Parameter zu verstehen. Die Netzfrequenz ist hierbei als stabil zu betrachten, wenn eine vorbestimmte Sollfrequenz erreicht ist. Diese beträgt in Zentraleuropa 50,00 Hz, bei Abweichung der Netzfrequenz von diesem Sollwert, insbesondere hin zu größeren Frequenzen, kann dies als Netzsignal dienen, um das Vorliegen von einem Angebot an elektrischem Überschussstrom anzuzeigen. Bei Überschreiten einer vorbestimmten Frequenzschwelle, beispielsweise 50,10 Hz, kann der Gasturbinenbetreiber entscheiden, negative Regelleistung zur Verfügung zu stellen.

Ebenso ist es denkbar, dass das Netzsignal ein externes Steuersignal ist, insbesondere des Betreibers des Übertragungsnetzes. Das Steuersignal kann insbesondere ein Telekommunikationssignal sein, welches der Betreiber des Übertragungsnetzes abgibt. Bei Erhalt dieses Netzsignals kann beispielsweise der Gasturbinenbetreiber entscheiden, negative Regelleistung durch einen Rückleistungsbetrieb der Gasturbine anzubieten.

Entsprechend einer besonders bevorzugten Ausführungsform des erfindungsgemäßen Verfahrens ist vorgesehen, dass der veränderte Betriebsparameter die Menge des an eine Brennkammer der Gasturbine zugeführten Brennstoffs ist. In anderen Worten kann die Brennstoffzufuhr verändert werden, insbesondere vermindert werden, um eine erhöhte elektrische Aufnahmerückleistung aus dem Übertragungsnetz zu erzielen. Die maximale Menge an elektrischer Rückleistung kann theoretisch dadurch erreicht werden, dass etwa die Brennstoffzufuhr vollständig abgestellt wird, wobei die im Rückleistungsbetrieb aufgenommene elektrische Energie vollständig für den mechanischen Betrieb der Gasturbine (Drehung des Rotors bzw. der Rotoren) vorgesehen ist. Um ein günstiges Startverhalten weiterhin zu gewährleisten, wird jedoch dieser Betrieb kaum vorgenommen und die praktisch erreichbare maximale elektrische Rückleistung ist typischerweise dann erreicht, wenn die Brennstoffzufuhr auf diejenige Menge vermindert wird, welche zur Aufrechterhaltung des Pilotflammenbetriebs der Gasturbine noch erforderlich ist. Durch diesen Pilotflammenbetrieb kann gewährleistet werden, dass bei Bedarf die Gasturbine in kurzer Zeit wieder zur Erzeugung von elektrischer Leistung hochgefahren werden kann. Der Pilotflammenbetrieb zeichnet sich dadurch aus, dass eine Mindestbrennstoffmenge (Pilotgasmenge) der Brennkammer der Gasturbine zugeführt wird, die ein Erlöschen der Verbrennung in der Brennkammer gerade noch verhindern kann. Insofern kann zu einem wirtschaftlichen Betrieb der Gasturbine im Rückleistungsbetrieb die Menge des Brennstoffs auf diese Mindestbrennstoffmenge zur Aufrechterhaltung des Pilotflammenbetriebs vermindert werden. Ein Betrieb bei größerer Brennstoffzufuhr ist jedoch etwa auch im unterstützenden Teillastbetrieb noch möglich. Hierbei unterstützt beispielsweise die durch die Verbrennung des Brennstoffs erzeugte thermische Energie den motorischen Betrieb der Gasturbine. Je nach erzeugter Verbrennungsenergie kann hierbei auch negative Regelleistung zur Verfügung gestellt werden.

Gemäß einer weiteren vorteilhaften Ausführungsform der Erfindung ist vorgesehen, dass der veränderte Betriebsparameter, der Ansaugmassenstrom der Gasturbine ist. Durch die Veränderung der Menge an angesaugter Luft in den Kompressor der Gasturbine wird der Kompressionsmassenstrom beeinflusst, wodurch die Kompressionsleistung und damit die elektrische Leistung bei motorischem Betrieb der dynamoelektrischen Maschine verändert werden. So ist es grundsätzlich denkbar, den Ansaugmassenstrom durch eine geeignete Querschnittseinstellung des Ansaugluftkanals des Kompressors zu variieren. Durch eine Vergrößerung dieses Querschnitts wird der Ansaugmassenstrom bspw. größer, wodurch die dynamoelektrische Maschine im motorischen Betrieb vermehrt elektrische Leistung aus den Netzen zur Kompression nutzen kann/muss.

Weiterhin ist ausführungsgemäß vorsehen, dass der veränderte Betriebsparameter das Verhältnis von in den Kompressor eingesaugten und von aus dem Kompressor ausgeleiteten Fluidmassenstrom ist. In anderen Worten kann der veränderte Betriebsparameter durch die Änderung des Kompressionsmassenstroms nach Zugabe von zusätzlichem Kompressionsfluid in den Kompressor während des Vorgangs der Kompression ausgedrückt werden. Durch die Veränderung der Masse an aus dem Kompressor ausgeströmtem Kompressionsfluid wird ebenso die Kompressionsleistung beeinflusst. Da die Kompressionsleistung bei motorischem Betrieb der dynamoelektrischen Maschine wenigstens teilweise durch die aufgenommene elektrische Rückleistung aufgebracht werden muss, kann derart somit auch die Menge an aufgenommener elektrischer Energie geeignet eingestellt werden. Entsprechend einer konkreten Ausführungsform ist beispielsweise denkbar, zur Erhöhung des Kompressionsmassenstroms, Wasserdampf in den Kompressor einzuleiten, um damit die Arbeitsleistung des Kompressors zu erhöhen. Ebenso könnte beispielsweise aus einem Druckluftspeicher bzw. Gasspeicher zusätzlich Gas bzw. Druckluft in den Kompressor eingebracht werden, um die erforderliche Kompressionsleistung weiter zu erhöhen.

Gemäß einer besonders bevorzugten Ausführungsform des erfindungsgemäßen Verfahrens ist der veränderte Betriebsparameter ein Anstellwinkel von Vorleitschaufeln des Kompressors der Gasturbine. Durch diese Veränderung des Anstellwinkels der Vorleitschaufeln kann ebenfalls der Kompressionsmassenstrom geeignet beeinflusst werden, wodurch die Kompressionsleistung und damit die Rückleistung bei Betrieb der dynamoelektrischen Maschine als Motor geeignet eingestellt werden kann. Hierbei ist darauf hinzuweisen, dass die Vorleitschaufeln des Kompressors die erste Kompressionsstufe des Kompressors betreffen.

Alternativ oder auch zusätzlich kann der veränderte Betriebsparameter auch ein Anstellwinkel von Nachleitschaufeln des Kompressors der Gasturbine sein. Die Nachleitschaufeln unterscheiden sich von den Vorleitschaufeln dadurch, dass sie an zweiter oder nachfolgender Stufe in dem Kompressor der Gasturbine angeordnet sind. Vorleitschaufeln hingegen befinden sich an der ersten Stufe angeordnet. Durch die Veränderung des Anstellwinkels der Nachleitschaufeln wird wiederum der Kompressionsmassenstrom beeinflusst, wodurch die Kompressionsleistung verändert werden kann. Dies hat erneut Auswirkungen auf die Größe der Rückleistung, die bei motorischem Betrieb der dynamoelektrischen Maschine aufgenommen wird.

Gemäß einer weiteren besonders bevorzugten Ausführungsform der Erfindung ist vorgesehen, dass der veränderte Betriebsparameter ein Anstellwinkel der Abblasklappen des Kompressors der Gasturbine ist. Ebenfalls durch die Veränderung des Anstellwinkels der Abblasklappen kann der Kompressionsmassenstrom beeinflusst werden, indem nämlich etwa der Kompressionswiderstand erhöht oder erniedrigt wird. Dadurch ändert sich erneut die Kompressionsleistung, die beim motorischen Betrieb der dynamoelektrischen Maschine wenigstens teilweise durch die aufgenommene elektrische Rückleistung aus den Übertragungsnetzen aufgebracht werden muss.

Entsprechend einer weiteren Ausführungsform des erfindungsgemäßen Verfahrens ist vorgesehen, dass der veränderte Betriebsparameter der Abgasmassenstrom aus einer Brennkammer ist, welcher einem Expander der Gasturbine zugeführt wird. In anderen Worten kann durch die Veränderung der Menge an Abgas, welches dem Expander der Gasturbine aus dem Kompressor zur Entspannung zugeführt wird, die Arbeitsleistung der gesamten Gasturbine beeinflusst werden. Es kann sich ausführungsgemäß also das Verhältnis von aus der Brennkammer abgeleiteten Abgasmassenstrom und in den Expander eingeleiteten Abgasmassenstrom ändern. So ist es bspw. denkbar, dass der Kompressor und der Expander der Gasturbine beispielsweise mechanisch voneinander entkoppelt vorliegen. Wird nun der Abgasstrom aus der Brennkammer nicht dem Expander zugeleitet, sondern etwa einem anderen Funktionsbauteil (z. B. einem Wärmespeicher) wird durch die Gasturbine keine weitere Entspannungsleistung in dem Expander erzeugt und die aufzubringende Rückleistung wird in erster Linie durch den Betrieb des Kompressors bestimmt. Wird also beispielsweise der Abgasmassenstrom durch geeignete Nutzung der thermischen Energie etwa zu Speicherzwecken nicht zur elektrischen Stromerzeugung genutzt, steht die in dem Abgasstrom beinhaltete thermische Energie nicht unmittelbar zur Stromerzeugung zur Verfügung und vermindert damit den momentanen Gesamtwirkungsgrad der Gasturbine. Wird die thermische Energie des Abgasstroms beispielsweise in einem Wärmespeicher zwischengespeichert, kann diese thermische Energie jedoch wiederum zu einem späteren Zeitpunkt genutzt und etwa in einem Rückverstromungsverfahren zur Stromgewinnung herangezogen werden.

Gemäß einer weiteren vorteilhaften Ausführungsform des erfindungsgemäßen Verfahrens ist der veränderte Betriebsparameter der Kompressionsmassenstrom aus dem Kompressor, welcher der Brennkammer der Gasturbine zugeführt wird. In anderen Worten wird also der Massenstrom des der Brennkammer zugeführten Kompressionsfluids geändert. Es kann sich ausführungsgemäß also das Verhältnis von aus dem Kompressor ausgeleiteten Fluidmassenstrom und in die Brennkammer eingeleiteten Fluidmassenstrom ändern. Durch eine Veränderung bspw. der Menge an komprimierter Luft, welche der Brennkammer der Gasturbine zur Verbrennung zugeführt wird, kann wiederum die Arbeitsleistung zur Stromerzeugung in der gesamten Gasturbine beeinflusst werden. Wird etwa der Kompressionsmassenstrom aus dem Kompressor nicht der Brennkammer zugeleitet, sondern etwa einem anderen Funktionsbauteil (z. B. einem Druckspeicher bzw. einem Wärmespeicher) wird durch die Gasturbine möglicherweise nur eine geringere Verbrennungsleistung erreicht und infolge auch nur eine geringere Entspannungsleistung in dem Expander freigesetzt. Demgemäß wird die aufzubringende Rückleistung in erster Linie durch den Betrieb des Kompressors bestimmt. Dies wiederum erfordert vorwiegend die Nutzung von elektrischer Energie im Rückleistungsbetrieb und lässt keine elektrische Energie durch Erzeugung im Expander anfallen. Weiterhin ermöglicht dieses ausführungsgemäße Verfahren die zeitlich nachfolgende Nutzung der etwa in einem Energiespeicher zwischengespeicherten Energie.

Entsprechend eines weiteren vorteilhaften Aspekts der Erfindung ist ein weiterer Schritt von dem ausführungsgemäßen Verfahren zusätzlich mit umfasst. Dieser ist: Einspeisung von Ausschussenergie während des motorischen Betriebs der dynamoelektrischen Maschine in einen Energiespeicher. Ausschussenergie kann hierbei im Sinne von thermischer nicht unmittelbar genutzter Energie (etwa zur Stromerzeugung in dem Expander) bzw. als physikalische Energie oder auch als chemische Energie anfallen. Ein solcher Energiespeicher kann insofern als Wärmespeicher, Druckluftspeicher und/oder thermochemischer Speicher ausgebildet sein, in welche die Ausschussenergie in geeigneter Form eingespeichert werden kann. Durch diese Zwischenspeicherung der Energie ergibt sich einerseits ein stark flexibler Betrieb der Gasturbine im Rückleistungsbetrieb, andererseits kann zusätzlich auch die bei diesem Betrieb erzeugte Energie in anderen Formen zu einem späteren Zeitpunkt erneut wirtschaftlich vorteilhaft genutzt werden.

Nachfolgend soll die Erfindung anhand von einzelnen Figuren im Detail näher erklärt werden. Hierbei sei darauf hingewiesen, dass die Figuren lediglich schematisch zu verstehen sind und keine Einschränkung hinsichtlich der Ausführbarkeit der Erfindung darstellen.

Die in den nachfolgenden Figuren gezeigten Einzelmerkmale werden für sich selbst, wie auch in beliebiger Kombination mit anderen Merkmalen beansprucht, soweit diese Kombination die vorliegende Erfindungsaufgabe(n) zu lösen im Stande ist.

Fernerhin sei darauf hingewiesen, dass die technischen Merkmale, die durch gleiche Bezugszeichen gekennzeichnet sind, eine vergleichbare technische Wirkung aufweisen.

Hierbei zeigen:
FIG 1 eine schematische Schaltansicht mit Energieströmen bei herkömmlichem Betrieb einer Gasturbine zur Erzeugung von elektrischer Leistung, die einem Versorgungs- bzw. Übertragungsnetz zur Verfügung gestellt werden kann;
FIG 2 eine schematische Darstellung einer im Rückleistungsbetrieb zur Bereitstellung negativer Regelleistung betriebenen Gasturbine mit den ebenfalls dargestellten Energieströmen, wobei die elektrische Rückleistung aus einem Versorgungs- bzw. Übertragungsnetz entnommen wird;
FIG 3 eine Ausführungsform der erfindungsgemäßen Gasturbine in schematischer Schaltansicht zur Ausübung einer Ausführungsform des erfindungsgemäßen Verfahrens zum Bereitstellen von negativer Regelleistung;
FIG 4 eine flussdiagrammatische Darstellung einer Ausführungsform des erfindungsgemäßen Verfahrens zum Bereitstellen negativer Regelleistung;
FIG 5 eine diagrammatische Darstellung des zeitlichen Verlaufs verschiedener technischer Kenngrößen bei Betrieb einer Gasturbine gemäß einer Ausführungsform des erfindungsgemäßen Verfahrens bei Abschaltung der Brennstoffzufuhr;
FIG 6 eine diagrammatische Darstellung des zeitlichen Verlaufs verschiedener technischer Kenngrößen bei Betrieb einer Gasturbine gemäß einer Ausführungsform des erfindungsgemäßen Verfahrens bei Verminderung der Brennstoffzufuhr an die Gasturbine auf die Versorgung mit einer Minimalmenge an Brennstoff zur Aufrechterhaltung eines Pilotflammenbetriebs.

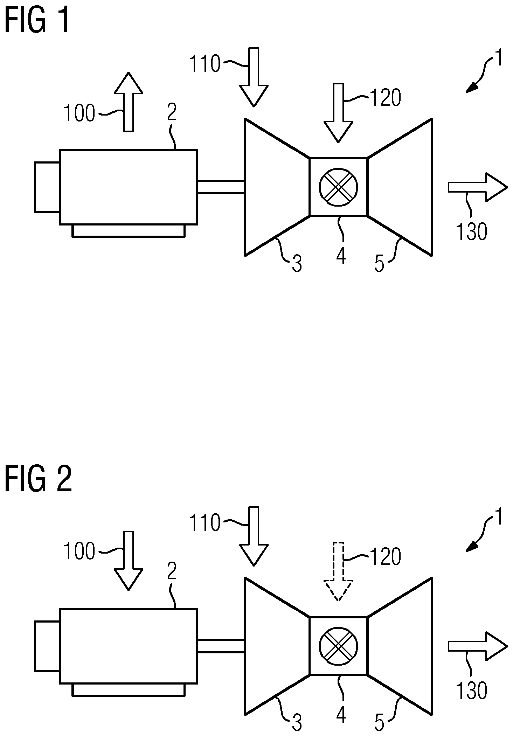

FIG 1 zeigt schematisch eine Ausführungsform einer Gasturbine 1, die in herkömmlicher Weise zur elektrischen Stromerzeugung betrieben wird. Die Gasturbine 1 umfasst im Sinne eines Gasturbosatzes eine als Generator arbeitende dynamoelektrische Maschine 2, einen Kompressor 3, eine Brennkammer 4 sowie einen Expander 5. Die dynamoelektrische Maschine 2 ist hierbei mit dem Kompressor 3 und/oder mit dem Expander 5 mechanisch durch eine Welle (nicht weiter mit Bezugszeichen versehen) gekoppelt. Bei herkömmlichem Betrieb der Gasturbine 1 wird dem Kompressor 3 Ansaugluft 110 zugeführt, die in dem der Brennkammer 4 zusammen mit Brennstoff 120 verbrannt wird. Das Abgas dieser Verbrennung wird über den Expander 5 zur Bereitstellung von mechanischer Leistung entspannt. Durch diesen Entspannungsvorgang wird die Welle mit einer Drehbewegung beaufschlagt, wobei gleichzeitig die dynamoelektrische Maschine 2 energetisiert wird und elektrische Energie 110 erzeugen und abzugeben vermag. Diese elektrische Energie 100 wird typischerweise Versorgungs- und/oder Übertragungsnetzen als elektrische Energie übertragen (vorliegend nicht gezeigt). Das entspannte Abgas 130 wird aus dem Expander 5 abgeführt und möglicherweise zur weiteren etwa thermischen Nutzung anderen Funktionsteilen (vorliegend nicht gezeigt) zugeführt.

FIG 2 zeigt nun eine weitere schematische Darstellung, der in FIG 1 gezeigten Gasturbine 1, wobei der Betriebszustand nicht der herkömmliche zur Stromerzeugung, sondern derjenige gemäß einer Ausführungsform des erfindungsgemäßen Verfahrens zur Nutzung von elektrischer Energie mittels eines Rückleistungsbetriebs ist. Für diesen Rückleistungsbetrieb nimmt die dynamoelektrische Maschine 2, die nun im Sinne eines Motors arbeitet, elektrische Energie 100 aus einem Versorgungs- und/oder Übertragungsnetz auf und setzt diese in eine Drehbewegung, der nicht weiter mit Bezugszeichen versehenen Welle, um. Dies wiederum führt zu einer Drehbewegung des Rotors des Kompressors 3, so dass Ansaugluft 110 in den Kompressor 3 einströmt und verdichtet wird. Diese so verdichtete Luft wird der Brennkammer 4 zugeführt, in welcher sie möglicherweise wenigstens teilweise mit Brennstoff 120 verbrannt werden kann. Die Menge der Brennstoffzuführung in die Brennkammer 4 kann entsprechend der nachgefragten negativen Regelleistung eingestellt werden. Nach entsprechender (teilweiser) Verbrennung, bzw. falls eine solche nicht erfolgt, nach erfolgter Kompression und Durchströmen der Brennkammer 4 wird das Abgas 130 (= Verbrennungsabgas bzw. komprimierte Luft bzw. eine Mischung von beiden) über den Expander 5 entspannt.

Hierbei kann beispielsweise die Druckenergie bzw. die thermische Energie der noch in dem Abgas 130 verbleibende Energiemenge weiter genutzt werden. In anderen Worten kann bspw. durch den Betrieb der dynamoelektrischen Maschine 2 als Motor die Gasturbine 1 bis etwa 60% der elektrischen Nennleistung zur Bereitstellung von negativer Regelleistung betrieben werden. Diese Regelleistung kann verhältnismäßig kurzfristig bereitgestellt werden. So kann beispielsweise die Brennstoffzufuhr des Brennstoffs 120 vermindert werden. Dieser Vorgang kann beispielsweise etwa durch eine weitere Veränderung des Anstellwinkels der Leitschaufeln bzw. durch ein Öffnen der Abblasklappen des Verdichters unterstützt werden. Diese Einstellungen werden je nach gewünschtem Leistungsgradienten vorgenommen.

Grundsätzlich besteht die Möglichkeit der vollständigen Unterbrechung der Brennstoffzufuhr und damit eine sehr hohe Leistungsaufnahme durch die Gasturbine 1. Alternativ können aber auch verschiedene Teilleistungen realisiert werden, etwa durch Kombination aus einer Verminderung des Kompressionsmassenstroms durch eine Veränderung des Anstellwinkels der Leitschaufeln und durch eine Verminderung des Brennstoffmassenstroms, etwa bis zur Mindestbrennstoffmenge, die noch einen Betrieb im Pilotflammenbetrieb erlaubt.

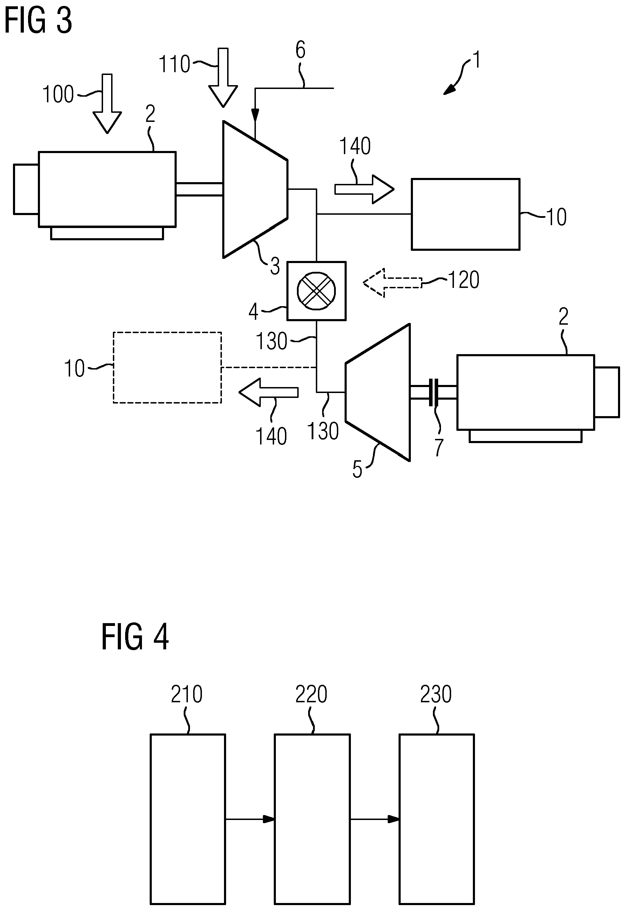

FIG 3 zeigt eine weitere Ausführungsform der erfindungsgemäßen Gasturbine 1, welche einen Kompressor 3 sowie einen Expander 5 aufweist, die mechanisch voneinander entkoppelt sind. Beide sind über eine geeignete und nicht weiter mit Bezugszeichen versehene Leitung mit der Brennkammer 4 verbunden. Gleichzeitig ist der Kompressor 3 über eine nicht weiter mit Bezugszeichen versehene Welle mit einer dynamoelektrischen Maschine 2 gekoppelt, die ausführungsgemäß zur Aufnahme von elektrischer Energie 100 aus einem Versorgungs- und/oder Übertragungsnetz ausgelegt ist. Die durch den motorischen Betrieb der dynamoelektrischen Maschine 2 angesaugte Luft 110, die in dem Kompressor 3 komprimiert wird, wird der Brennkammer 4 zugeführt, in welcher diese etwa zusammen mit Brennstoff 120 verbrannt werden kann. Zur Erhöhung des Kompressionsmassenstroms kann vorgesehen sein, dass über eine Fluidzuleitung 6 dem Kompressor 3 etwa Wasser in Dampfform zugegeben wird. Alternativ kann über diese Fluidzuleitung 6 auch ein Gas dem Kompressionsraum zugeführt werden, welches etwa einem Gasspeicher entnommen wird, um den Kompressionsmassenstrom zu erhöhen.

Ein Teil bzw. der gesamte aus dem Kompressor 3 ausgeleitete Kompressionsmassenstrom kann zur Speicherung von physikalischer und/oder chemischer Energie einem Energiespeicher 10 zugeführt werden. Dieser Energiespeicher kann beispielsweise als Druckspeicher bzw. Wärmespeicher ausgebildet sein. Wird ein Teil des Kompressionsmassenstroms in der Brennkammer 4 mit Brennstoff 120 verbrannt, kann dieses Abgas 130 dem Expander 5 zur Entspannung zugeleitet werden. Alternativ oder auch zusätzlich kann dieses Abgas 130 auch einem weiteren Energiespeicher 10 zur Speicherung von physikalischer und/oder chemischer Energie 140 zugeleitet werden. Auch dieser Energiespeicher 10 kann etwa als Druckspeicher bzw. Wärmespeicher ausgebildet sein.

Bei Entspannung des Abgases 130 über den Expander 5 kann ausführungsgemäß die mit dem Expander 5 über eine nicht weiter mit Bezugszeichen versehene Welle gekoppelte dynamoelektrische Maschine 2 energetisiert werden. Sind die dynamoelektrische Maschine 2 und der Expander 5 über eine gekuppelte Welle miteinander verbunden, kann beispielsweise auch eine Entspannung des Abgases 130 über den Expander 5 erfolgen, ohne dass die dynamoelektrische Maschine energetisiert wird. Hierbei kommt es also lediglich zu einer Gasentspannung unter gleichzeitiger Abkühlung des Abgases 130.

FIG 4 zeigt eine weitere Ausführungsform des erfindungsgemäßen Verfahrens zum Bereitstellen negativer Regelleistung in einer flussdiagrammatischen Darstellung. Hierbei weist das Verfahren folgende Schritte auf:
- Versorgen einer dynamoelektrischen Maschine 2 der Gasturbine 1 mit elektrischer Energie aus einem elektrischen Versorgungs- und/oder Übertragungsnetz zum motorischen Betrieb (erster Verfahrensschritt 210);
- Regeln bzw. Steuern der elektrischen Aufnahmeleistung durch den motorischen Betrieb in Abhängigkeit eines Netzsignals des Versorgungs- und/oder Übertragungsnetzes, an welches die Gasturbine 1 angeschlossen ist (zweiter Verfahrensschritt 220);
- Verändern eines Betriebsparameters der Gasturbine 1 für den motorischen Betrieb infolge dieser Regelung bzw. Steuerung zur beabsichtigten Erhöhung der elektrischen Aufnahmeleistung aus dem Übertragungsnetz (dritter Verfahrensschritt 230);

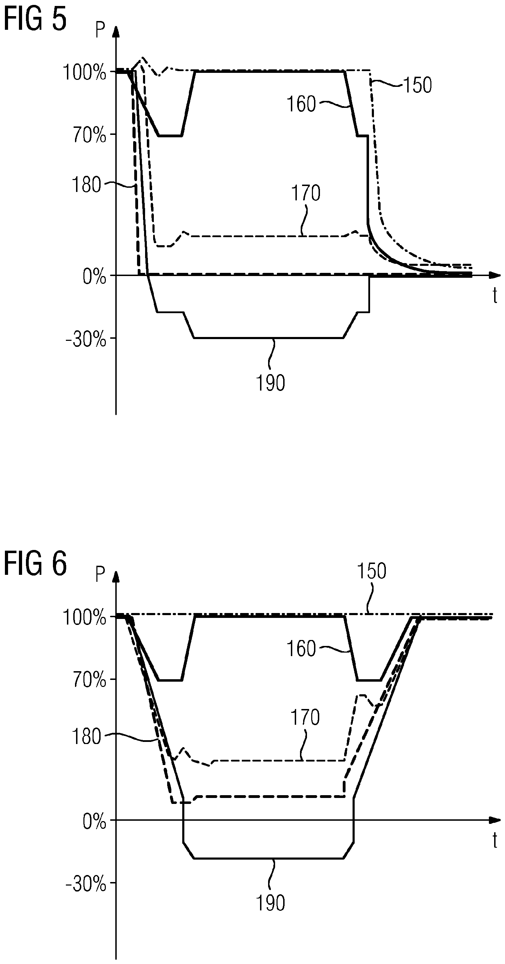

FIG 5 zeigt in diagrammatischer Darstellung die zeitliche Abhängigkeit verschiedener technischer Betriebsparameter bei ausführungsgemäßem Betrieb einer Gasturbine 1 zur Bereitstellung von negativer Regelleistung an ein Versorgungs- und/oder Übertragungsnetz. Hierbei ist dargestellt, wie die verschiedenen Betriebsparameter nach Änderung eines herkömmlichen zur Stromerzeugung vorgesehenen Betriebs der Gasturbine 1 zur Ausführung des ausführungsgemäßen Verfahrens zur Bereitstellung von negativer Regelleistung geändert werden. Die Änderungen wurden auf Grundlage einer vereinfachten Modellierung vorhergesagt. Die Änderungsraten sind lediglich relativ zu den Größen angegeben, wie sie bei einem herkömmlichen Strom erzeugenden Betrieb vorliegen.

So ist etwa zu erkennen, dass die Zufuhr vom Brennstoff 120 vollständig abgeschaltet wird. Der Brennstoffverbrauch 180 fällt folglich auf ein Niveau von 0%. Gleichzeitig nimmt die dynamoelektrische Maschine 2 elektrische Energie aus dem Netz auf und gewährleistet nach anfänglicher kurzer Einsteuerungsphase eine im Wesentlichen konstant gehaltene Drehzahl 150. Während der Einsteuerungsphase nimmt der Verdichtermassenstrom 160 kurzzeitig ab, wird jedoch wieder bei Erreichen der Nenndrehzahl auf 100% seines ursprünglichen Wertes angehoben. Aufgrund der vollständig unterbundenen Verbrennung in der Brennkammer 4 fällt auch die Brennkammertemperatur, die sich auf einem leicht erhöhten Niveau über 0% (= keine Temperaturerhöhung über einem Umgebungstemperaturniveau) eingestellt. Die Temperaturerhöhung stammt maßgeblich aus der bei Kompression der Ansaugluft 110 frei werdenden Kompressionserwärmung.

Wie die diagrammatische Darstellung weiter leicht nachvollziehbar verdeutlicht, fällt auch die elektrische Abgabeleistung der Gasturbine 1 von einem positiven Wert von 100 % auf einen negativen Wert von -30%. Folglich hat die Gasturbine 1 negative Regelleistung aufzunehmen, um ihren Betrieb weiter aufrechterhalten zu können. Diese so aufgenommene elektrische Leistung dient der Bereitstellung von negativer Regelleistung an ein Versorgungs- und/oder Übertragungsnetz.

Das Diagramm zeigt weiterhin gegen Ende des Zeitverlaufs eine erneute sprunghafte Änderung der Betriebsparameter, infolge eines vollständigen Abschaltens (Abkopplung vom Netz) der Gasturbine 1.

FIG 6 zeigt eine weitere diagrammatische Darstellung des zeitlichen Verlaufs verschiedener technischer Betriebsparameter bei Betrieb einer Gasturbine 1 gemäß einer Ausführungsform des erfindungsgemäßen Verfahrens zum Bereitstellen von negativer Regelleistung. Hierbei erfolgt, ähnlich dem in FIG 5 veranschaulichten Betrieb, eine Verminderung der Zufuhr von Brennstoff 120 an die Brennkammer 104 einer Gasturbine 1. Im Gegensatz zu dem in FIG 5 dargestellten Verfahren, wird jedoch die Brennstoffzufuhr nicht soweit unterdrückt, dass kein Brennstoffverbrauch 180 erfolgt, sondern es wird ein minimaler Brennstoffverbrauch 180 eingestellt, der ausreichend ist, um einen Pilotflammenbetrieb der Gasturbine 1 aufrechtzuerhalten. Infolgedessen ergibt sich nach einer Zeit zu einem Zeitpunkt des stabilisierten Betriebs eine verhältnismäßig höhere Brennkammertemperatur 170 als etwa in FIG 5 zu erkennen ist. Ebenfalls ist die Menge der durch die dynamoelektrische Maschine 2 im Rückleistungsbetrieb aufgenommene elektrische Leistung verhältnismäßig geringer, da der Betrieb der Gasturbine 1 weiterhin durch die Verbrennung des Brennstoffs unterstützt wird.

Gegen Ende des zeitlichen Verlaufs der in FIG 6 dargestellten Änderungen der technischen Betriebsparameter erfolgt eine Wiederaufnahme des normalen, Strom erzeugenden Betriebs durch die Gasturbine 1.

Weitere Ausführungsformen ergeben sich aus den Unteransprüchen.

## Patentansprüche

1. Verfahren zum Bereitstellen negativer Regelleistung an ein elektrisches Versorgungs- und/oder Übertragungsnetz durch Betrieb einer Gasturbine (1) umfassend die folgenden Schritte:
- Versorgen einer Dynamoelektrischen Maschine (2) der Gasturbine (1) mit elektrischer Energie zum motorischen Betrieb aus dem Versorgungs-und/oder Übertragungsnetz;
- Regeln bzw. Steuern der elektrischen Aufnahmeleistung durch den motorischen Betrieb in Abhängigkeit eines Netzsignals des Versorgungs- und/oder Übertragungsnetzes, an welches die Gasturbine (1) angeschlossen ist;
- Verändern eines Betriebsparameters der Gasturbine (1) für den motorischen Betrieb infolge dieser Regelung bzw. Steuerung zur beabsichtigten Erhöhung der elektrischen Aufnahmeleistung aus dem Versorgungs- und/oder Übertragungsnetz.

2. Verfahren gemäß Anspruch 1,
**dadurch gekennzeichnet, dass** die Rückleistungsschutzschaltung der Dynamoelektrischen Maschine (2), die insbesondere als Generator ausgebildet ist, elektrisch bzw. schaltungstechnisch umgangen wird und insbesondere eine alternative Schutzschaltung zugeschaltet wird, die den motorischen Betrieb ermöglicht.

3. Verfahren gemäß einem der vorhergehenden Ansprüche,
**dadurch gekennzeichnet, dass** das Netzsignal die Netzfrequenz des Versorgungs- und/oder Übertragungsnetzes ist.

4. Verfahren gemäß einem der vorhergehenden Ansprüche,
**dadurch gekennzeichnet, dass** das Netzsignal ein externes Steuersignal, insbesondere des Betreibers des Versorgungs- und/oder Übertragungsnetzes ist.

5. Verfahren gemäß einem der vorhergehenden Ansprüche,
**dadurch gekennzeichnet, dass** der veränderte Betriebsparameter die Menge des an eine Brennkammer (4) der Gasturbine (1) zugeführten Brennstoffs ist.

6. Verfahren gemäß einem der vorhergehenden Ansprüche,
**dadurch gekennzeichnet, dass** der veränderte Betriebsparameter der Ansaugmassenstrom der Gasturbine (1) ist.

7. Verfahren gemäß einem der vorhergehenden Ansprüche,
**dadurch gekennzeichnet, dass** der veränderte Betriebsparameter das Verhältnis von in den Kompressor (3) eingesaugten und von aus dem Kompressor (3) ausgeleiteten Fluidmassenstrom ist.

8. Verfahren gemäß einem der vorhergehenden Ansprüche,
**dadurch gekennzeichnet, dass** der veränderte Betriebsparameter ein Anstellwinkel von Vorleitschaufeln des Kompressors (3) der Gasturbine (1) ist.

9. Verfahren gemäß einem der vorhergehenden Ansprüche,
**dadurch gekennzeichnet, dass** der veränderte Betriebsparameter ein Anstellwinkel von Nachleitschaufeln des Kompressors (3) der Gasturbine (1) ist.

10. Verfahren gemäß einem der vorhergehenden Ansprüche,
**dadurch gekennzeichnet, dass** der veränderte Betriebsparameter ein Anstellwinkel der Abblasklappen des Kompressors (3) der Gasturbine (1) ist.

11. Verfahren gemäß einem der vorhergehenden Ansprüche,
**dadurch gekennzeichnet, dass** der veränderte Betriebsparameter der Abgasmassenstrom aus einer Brennkammer (4) ist, welcher einem Expander (5) der Gasturbine (1) zugeführt wird.

12. Verfahren gemäß einem der vorhergehenden Ansprüche,
**dadurch gekennzeichnet, dass** der veränderte Betriebsparameter der Kompressionsmassenstrom aus dem Kompressor (3) ist, welcher der Brennkammer (4) der Gasturbine (1) zugeführt wird.

13. Verfahren gemäß einem der vorhergehenden Ansprüche,
**dadurch gekennzeichnet, dass** weiterhin der folgende Schritt mit umfasst ist:
- Einspeisen von Ausschussenergie während des motorischen Betriebs der Dynamoelektrischen Maschine (2) in einen Energiespeicher (10).

14. Gasturbine (1) mit einer Regel- bzw. Steuerungseinrichtung, welche mit einer dynamoelektrischen Maschine gekoppelt und dazu ausgebildet ist, ein Verfahren gemäß einem der vorhergehenden Ansprüche auszuführen.

## Claims

1. Method for providing negative control power to an electrical supply and/or transmission grid by the operation of a gas turbine (1), comprising the following steps:
- supplying a dynamoelectric machine (2) of the gas turbine (1) with electrical energy from an electrical supply and/or transmission grid for operation as a motor;
- controlling the electrical consumed power by the operation as a motor depending on a grid signal from the supply and/or transmission grid to which the gas turbine (1) is connected;
- changing an operating parameter of the gas turbine (1) for the operation as a motor as a result of this control in order to purposefully increase the electrical consumed power from the transmission grid.

2. Method according to Claim 1, **characterized in that** the reverse power protection circuit of the dynamoelectric machine (2), which is designed in particular as a generator, is bypassed electrically or in terms of circuitry and in particular an alternative protective circuit is connected which enables operation as a motor.

3. Method according to one of the preceding claims, **characterized in that** the grid signal is the grid frequency of the supply and/or transmission grid.

4. Method according to one of the preceding claims, **characterized in that** the grid signal is an external control signal, in particular from the operator of the supply and/or transmission grid.

5. Method according to one of the preceding claims, **characterized in that** the changed operating parameter is the amount of the fuel supplied to a combustion chamber (4) of the gas turbine (1).

6. Method according to one of the preceding claims, **characterized in that** the changed operating parameter is the sucked-in mass flow of the gas turbine (1).

7. Method according to one of the preceding claims, **characterized in that** the changed operating parameter is the ratio between the fluid mass flow sucked into the compressor (3) and that drained from the compressor (3).

8. Method according to one of the preceding claims, **characterized in that** the changed operating parameter is a pitch angle of upstream guide blades of the compressor (3) of the gas turbine (1).

9. Method according to one of the preceding claims, **characterized in that** the changed operating parameter is a pitch angle of downstream guide blades of the compressor (3) of the gas turbine (1).

10. Method according to one of the preceding claims, **characterized in that** the changed operating parameter is a pitch angle of the bleed valves of the compressor (3) of the gas turbine (1)

11. Method according to one of the preceding claims, **characterized in that** the changed operating parameter is the exhaust gas mass flow from a combustion chamber (4) which is supplied to an expander (5) of the gas turbine (1).

12. Method according to one of the preceding claims, **characterized in that** the changed operating parameter is the compression mass flow from the compressor (3) which is supplied to the combustion chamber (4) of the gas turbine (1).

13. Method according to one of the preceding claims, **characterized in that** the following step is moreover included:
- feeding rejected energy, during the operation of the dynamoelectric machine (2) as a motor, into an energy store (10).

14. Gas turbine (1), having a control device which is coupled to a dynamoelectric machine and which is designed to carry out a method according to one of the preceding claims.

## Revendications

1. Procédé de mise à disposition d'une puissance de régulation négative sur un réseau électrique d'alimentation et/ou de transport en faisant fonctionner une turbine (1) à gaz, comprenant les stades suivantes :
- alimentation d'une machine (2) dynamoélectrique de la turbine (1) à gaz en énergie électrique pour le fonctionnement en moteur, à partir du réseau d'alimentation et/ou de transport ;
- régulation ou commande de la puissance électrique absorbée par le fonctionnement en moteur en fonction d'un signal du réseau d'alimentation et/ou de transport auquel la turbine (1) à gaz est raccordée ;
- modification d'un paramètre de fonctionnement de la turbine (1) à gaz pour le fonctionnement en moteur, à la suite de cette régulation ou commande, pour augmenter délibérément la puissance électrique absorbée du réseau d'alimentation et/ou de transport.

2. Procédé suivant la revendication 1,
**caractérisé en ce que**
l'on contourne, électriquement ou en technique de circuit, le circuit de protection de puissance réactive de la machine (2) dynamoélectrique, qui est constituée notamment en génératrice, et, en particulier, on branche un circuit alternatif de protection, qui rend possible le fonctionnement en moteur.

3. Procédé suivant l'une des revendications précédentes,
**caractérisé en ce que**
le signal du réseau est la fréquence du réseau d'alimentation et/ou de transport.

4. Procédé suivant l'une des revendications précédentes,
**caractérisé en ce que**
le signal du réseau est un signal de commande extérieur, notamment de l'exploitant du réseau d'alimentation et/ou de transport.

5. Procédé suivant l'une des revendications précédentes,
**caractérisé en ce que**
le paramètre de fonctionnement modifié est la quantité du combustible envoyée à une chambre de combustion (4) de la turbine (1) à gaz.

6. Procédé suivant l'une des revendications précédentes,
**caractérisé en ce que**
le paramètre de fonctionnement modifié est le courant massique d'aspiration de la turbine (1) à gaz.

7. Procédé suivant l'une des revendications précédentes,
**caractérisé en ce que**
le paramètre de fonctionnement modifié est le rapport du courant massique de fluide aspiré dans le compresseur (3) et refoulé du compresseur (3).

8. Procédé suivant l'une des revendications précédentes,
**caractérisé en ce que**
le paramètre de fonctionnement modifié est un angle d'attaque d'aubes pré-directrices du compresseur (3) de la turbine (1) à gaz.

9. Procédé suivant l'une des revendications précédentes,
**caractérisé en ce que**
le paramètre de fonctionnement modifié est un angle d'attaque d'aubes post-directrices du compresseur (3) de la turbine (1) à gaz.

10. Procédé suivant l'une des revendications précédentes,
**caractérisé en ce que**
le paramètre de fonctionnement modifié est un angle d'attaque des volets de purge du compresseur (3) de la turbine (1) à gaz.

11. Procédé suivant l'une des revendications précédentes,
**caractérisé en ce que**
le paramètre de fonctionnement modifié est le courant massique de gaz d'échappement d'une chambre de combustion (4), qui est envoyé à un détendeur (5) de la turbine (1) à gaz.

12. Procédé suivant l'une des revendications précédentes,
**caractérisé en ce que**
le fonctionnement modifié est le courant massique de compression sortant du compresseur (3), qui est envoyé à la chambre de combustion (4) de la turbine (1) à gaz.

13. Procédé suivant l'une des revendications précédentes,
**caractérisé en ce qu'**
il comprend en outre le stade suivant :
- injection d'énergie en excès pendant le fonctionnement en moteur de la machine (2) dynamoélectrique dans un accumulateur (10) d'énergie.

14. Turbine (1) à gaz ayant un dispositif de régulation de commande, qui est couplé à une machine thermoélectrique et qui est constitué pour effectuer un procédé suivant l'une des revendications précédentes.
